# EUROPEAN PATENT SPECIFICATION

(11) **EP 1 417 795 B1**
(45) Date of publication and mention of the grant of the patent: **14.09.2011**
(21) Application number: 02752479.2
(22) Date of filing: 23.07.2002
(51) Int. Cl.: H04J 3/14

(54) **SWITCHING NODE WITH CLASSIFICATION-DEPENDENT MAC BUFFER CONTROL**
VERMITTLUNGSKNOTEN MIT KLASSIFIZIERUNGSABHÄNGIGER MAC-PUFFERSTEUERUNG
NOEUD DE COMMUTATION AVEC REGULATION TAMPON DE COMMANDE D'ACCES MEDIA DEPENDANT DUNE CLASSIFICATION

(30) Priority: 23.07.2001 US 307269 P; 06.02.2002 US 68710
(43) Date of publication of application: 12.05.2004
(73) Proprietor: Alcatel Lucent, 75007 Paris (FR)
(72) Inventor: NARSINH, Anees, Pacific Palisades, CA 90272 (US); HITZELBERGER, James, A., Westlake Village, CA 91362 (US); CARTIER, Jean-Francois, 44119 Treillieres (FR); PHILIPPE, Levillain, 94120 Fontanay sous bois (FR)
(74) Representative: Knecht, Ulrich Karl
(86) International application number: PCT/US2002/023055
(87) International publication number: WO 2003/010909

(56) References cited:
- WO-A-01/31860
- US-A- 6 047 326
- US-B1- 6 252 849

## Description

### FIELD OF THE INVENTION

This invention relates generally to controlling traffic passing through a data communication switch, and more particularly, to preclassifying traffic at a media access controller for traffic congestion control.

### BACKGROUND OF THE INVENTION

Because data connections tend to be used intermittently, oversubscription of a switching controller of a data communication switch is generally an effective strategy for achieving more economical network connectivity. Oversubscription is achieved by allocating bandwidth on one or more ports coupled to the switching controller in excess of the actual bandwidth of the switching controller.

Oversubscription tends to increase the volume of traffic supported by a switching controller, leaving the switching controller more prone to congestion.

From US 6,047,326 a system and a method are known for charging the usage of a network service connection. The known system comprises a network, wherein the network comprises an access node and several further nodes. A user accesses the network via the access node. US 6,047,326 teaches to enable the access node to determine a nominal bit rate (NBR) and to measure a measured bit rat (MBR). The access node further determines a priority of a cell that is part of a data packet. The cells are transmitted from the access node to the further node in the network. The further node in the network receiving the cell then determines, whether the cell is to be accepted or discarded by using the priority that was determined at the access node. The known system and method use the access node in order to determine a priority of each cell, wherein the priority is based on NBR and MBR, which in turn are based on a user request of the user, accessing the network via the network node. The cell and the determined priority are transmitted together from the access node to the further node in the network. The network node then performs packet filtering in order to determine, whether the received cell is to be admitted or not. This determination is based on the priority that was determined at the access node. Thus, US 6,047,326 teaches to separate the steps of known filtering techniques by "outsourcing" the step of packet classification to a remote node, i.e. the access node.

Existing congestion control mechanisms are typically implemented at the switching controller level of the data communication switch. Generally, one or more media access controllers (MAC) resident in the switch receive incoming packets and provide them to the switching controller at wire speed as long as the switching controller is capable of accepting the packets. The packets are transmitted to the switching controller without regard to the type of priority associated with the incoming packets.

If the switching controller stops accepting packets, the MACs attempt to store the packets in one or more temporary buffers, again without any regard to the priority of the packets. Unfortunately, when the temporary buffers are full, the MACs generally discard further incoming packets until space becomes available again. The incoming packets are dropped even if they are associated with a high priority.

There is a need, therefore, for a data switch that provides oversubscription traffic management at the MAC level in addition to the traffic management at the switching controller level. The traffic management at the MAC level should, whenever possible, allow high priority packets to pass to the switching controller and drop low priority packets.

### SUMMARY OF THE INVENTION

The present invention is directed to an oversubscription traffic management at an access controller level.

According to one embodiment of the invention, a data communication node forwarding inbound packets includes an access controller and a switching controller. The access controller receives an inbound packet, classifies the packet, and determines whether the packet is to be admitted for forwarding to the switching controller or not based on congestion status data determined from the classification information. If the packet is forwarded, the switching controller receives the packet for further classifying the packet and determines whether the packet is to be further forwarded or not based on additional congestion status data determined from additional classification information.

In another embodiment of the invention, an access controller in a data communication node includes an input receiving an inbound packet, a classification engine coupled to the input classifying the inbound packet, a buffer storing inbound packets, and a disposition engine coupled to the classification engine and the buffer. The disposition engine receives the classification information and determines whether the inbound packet is to be admitted or not based on the classification information and a buffer utilization level. The disposition engine forwards the inbound packet to the switching controller, if the packet is admitted, for determining whether the admitted packet is to be further forwarded.

In a further embodiment of the invention, a method is provided for packet traffic management in a data communication node that includes an access controller and a switching controller. The method includes, at the access controller, receiving an inbound packet, classifying the inbound packet, and obtaining congestion status data from the classification information, admitting the inbound packet or not based on the congestion status data, and forwarding the inbound packet to the switching controller if the packet is admitted. The method further includes, at the switching controller, determining whether the admitted packet is to be further forwarded.

In another embodiment of the invention, a congestion control method is provided in a switching node that includes a media access controller having at least one input coupled to a switching controller having at least one output. The method selectively forwards packets received on the at least one input to the at least one output, and includes receiving a packet on an input and forwarding the packet on an output only if a first congestion check is passed at the media access controller and a second congestion check is passed at the switching controller. The first congestion check is based on first packet classification information and a first buffer utilization level.

It should be appreciated, therefore, that the present invention allows packets to be preclassified at an access controller level for use in determining whether the packet is to be admitted and forwarded to the switching controller. The preclassification and congestion avoidance mechanism at the access controller allow packets of higher priority to be admitted over packets of lower priority. Thus, the problem of the prior art of indiscriminately dropping packets at the access controller when the access controller buffer is full is avoided.

### BRIEF DESCRIPTION OF THE DRAWING

These and other features, aspects and advantages of the present invention will be more fully understood when considered with respect to the following detailed description, appended claims, and accompanying drawings where:
FIG. 1 is a schematic block diagram of a packet switching node according to one embodiment of the invention;
FIG. 2 is a schematic block diagram of a switching interface according to one embodiment of the present invention;
FIG. 3 is schematic block diagram of an access controller according to one embodiment of the present invention; and
FIG. 4 is a flow diagram of a process for traffic congestion control at an access controller level according to one embodiment of the invention.

### DETAILED DESCRIPTION OF THE SPECIFIC EMBODIMENTS

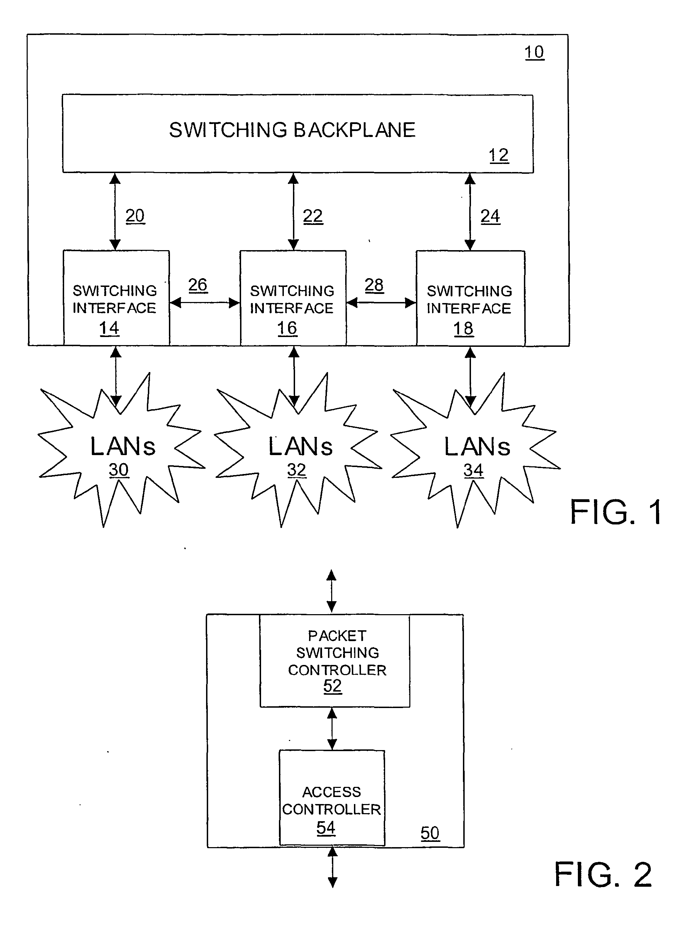

FIG. 1 is a schematic block diagram of a packet switching node 10 according to one embodiment of the invention. The packet switching node may also be referred to as a switch, a data communication node, or a data communication switch. The packet switching node 10 includes switching interfaces 14, 16 and 18 interconnected to respective groups of local area networks (LANs) 30, 32, 34, and interconnected to one another over data paths 20, 22, 24 via switching backplane 12. The switching backplane 12 preferably includes a switching fabric in a manner that is conventional in the art. The switching interfaces may also be coupled to one another over control paths 26 and 28.

The switching interfaces 14, 16, 18 preferably forward packets to and from their respective groups of LANs 30, 32, 34 in accordance with one or more operative communication protocols, such as, for example, media access control (MAC) address based bridging, and Internet Protocol (IP) routing. The switching node 10 is shown for illustrative purposes only. In practice, packet switching nodes may include more or less than three switching interfaces.

FIG. 2 is a schematic block diagram of a switching interface 50 according to one embodiment of the present invention. The switching interface 50 may be similar, for example, to the switching interfaces 14, 16, 18 of FIG. 1. The switching interface 50 includes an access controller 54 coupled between LANs and a packet switching controller 52. The access controller 54, which may, for example, include a media access controller (MAC), preferably receives inbound packets off LANs, performs physical and MAC layer operations on the inbound packets, and transmits the inbound packets to the packet switching controller 52 for flow-dependent processing. According to one embodiment of the invention, the access controller 54 performs access control operations including preclassification of inbound packets for determining whether the inbound packets are to be admitted based on the preclassification information and a detected congestion level.

The packet switching controller 52 preferably receives the admitted packets forwarded by the access controller 54, classifies the packets, and queues them for downstream congestion control. If the admitted packets are to be forwarded to their destination address based on the congestion control mechanism at the switching controller, the packet switching controller modifies the packets in accordance with flow information and transmits the modified packets on a switching backplane, such as the switching backplane 12 of FIG. 1.

The packet switching controller 52 preferably also receives packets modified by other packet switching controllers via the switching backplane and transmits them to the access controller 54 for forwarding on LANs. The packet switching controller 52 may also subject selected ones of the packets to egress processing prior to transmitting them to the access controller 54 for forwarding on LANs.

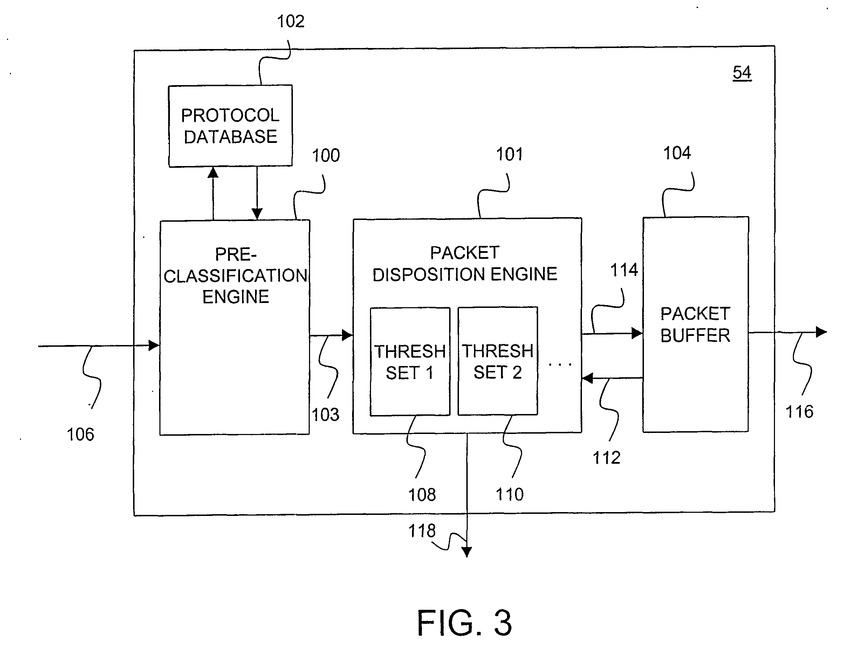

FIG. 3 is a more detailed block diagram of the access controller 54 according to one embodiment of the present invention. The access controller 54 preferably includes a packet preclassification engine 100, packet disposition engine 101, protocol database 102, and packet buffer 104. Although the packet preclassification engine 100 and packet disposition engine 101 are illustrated as separate engines, a person skilled in the art should recognize that they may be combined into a single engine or distributed over multiple engines.

It is also understood, of course, that FIG. 3 illustrates a block diagram of an access controller without obfuscating inventive aspects of the present invention with additional elements and/or components which may be required for the access controller. These additional elements and/or components, which are not shown in FIG. 3, are well known to those skilled in the art.

The packet preclassification engine 100 is preferably coupled to the protocol database 102 for preclassifying inbound packets 106 based on information contained in the protocol database. The packet preclassification engine 100 is preferably implemented in an application-specific integrated circuit (ASIC). The protocol database 102 is preferably a form of content addressable memory (CAM) storing Layer 3 protocol identifiers and their associated priorities. The packet preclassification engine 100 assigns a priority to the inbound packets 106 based on the protocol information and/or other header data such as, for example, 802.1P/Q tag status, Layer 2 encapsulation type, ToS (type of service) values, other connection information, embedded priority information, and/or the like.

The preclassification information 103 is transmitted to the packet disposition engine 101 for determining whether the inbound packets 106 are to be admitted based on the preclassification information and one or more thresholds 108, 110 set for the packet buffer 104. The packet disposition engine 101 is preferably implemented in an ASIC.

The packet buffer 104 preferably includes one or more queues for storing the inbound packets 106 that have been admitted by the packet disposition engine 101. According to one embodiment of the invention, the packet buffer 104 includes queues having different priorities for storing packets 106 based on their priority. The packets stored in the queues are dequeued and forwarded to the switching controller 52, preferably based on a priority-based dequeueing which is commonly referred to as class-based dequeuing. A person skilled in the art should recognize, however, that other algorithms may also be utilized for dequeuing the packets, such as, for example, a paycheck round robin algorithm or a combination of strict priority and weighted round robin.

In general terms, the access controller 54 receives the inbound packets 106 via an input, such as an inbound cable. The inbound packets 106 may include, but are not limited to, Ethernet frames, ATM cells, TCP/IP and/or UDP/IP packets, and may consist of Layer 2 (Data Link/MAC Layer), Layer 3 (Network Layer), Layer 4 (Transport Layer), or Layer 5 (ATM Adaptation Layer) data units. All or portions of the inbound packet are transmitted to the packet preclassification engine 100 for preclassification. In this regard, the packet preclassification engine 100 preferably examines an inbound packet's header data and preclassifies the packet for determining its priority. According to one embodiment of the invention, the preclassification engine 100 accesses the protocol database 102 and determines the packet's priority based on its protocol information. According to another embodiment of the invention, the packet's priority is determined based on the packet's information, encapsulation type, ToS values, other connection information, embedded priority information, and/or the like.

The preclassification information and/or all or portions of the inbound packet is transmitted to the packet disposition engine 101. The packet disposition engine determines whether the packet is to be admitted or dropped based on the preclassification information and detected congestion level of the packet buffer 104. The packet disposition engine 101 preferably invokes a weighted random early discard (WRED) algorithm for determining whether the preclassified packet is to be dropped or admitted. The WRED algorithm is a derivative of the RED algorithm, both of which are well known to those skilled in the art. The RED algorithm is described in detail in S. Floyd et. al, "Random Early Detection Gateways for Congestion Avoidance," IEE/ACM Transactions on Networking, 1(4):397-413, August 1993, the content of which is incorporated herein by reference. A person skilled in the art should recognize that the packet disposition engine 101 may utilize other algorithms for determining whether a packet is to be admitted, such as, for example, strict priority, weighted round robin, or other traffic shaping methods which are well known to those skilled in the art.

Preferably, the packet disposition engine 101 maintains at least two thresholds for each priority queue in the packet buffer 104, a minimum threshold and a maximum threshold. If a RED or WRED congestion control algorithm is utilized, the packet disposition engine further maintains a discard probability for each priority. According to one embodiment of the invention, the thresholds and discard probabilities set for the queues vary based on their priorities.

The packet disposition engine 101 preferably receives periodic updates 112 about the level of utilization of the packet buffer 104 for comparing against the minimum and maximum thresholds. According to one embodiment of the invention, the thresholds are recomputed based on the periodic updates 112.

According to both the RED and WRED algorithms, if the number of packets contained in a queue of the packet buffer 104 is less than a minimum threshold, the packet disposition engine 101 admits the inbound packet 106 destined for the queue and adds it to the queue. If the number of packets contained in the queue is more than the maximum threshold, the packet disposition engine 101 discards the packet. If the queue contains packets in between the minimum and maximum thresholds, the packet disposition engine 101 preferably discards the inbound packet according to a pre-determined discard probability associated with the queue.

Packets that are not dropped by the packet disposition engine 101 are admitted into the node and passed 114 to the packet buffer 104 for storage. Packets that are stored are preferably held in a common buffer where the utilization for each priority is monitored. When ready to be forwarded to the packet switching controller, the packet buffer 104 dequeues the packets, preferably according to a class based dequeuing, where packets in the higher priority queues are dequeued before packets in the lower priority queues. This allows higher priority queues to be emptied before lower priority queues, causing higher priority packets destined for the high priority queues to be admitted more often than lower priority packets. The dequeued packets are forwarded as outgoing packets 116 to the packet switching controller 52.

The packet switching controller 52 receives the admitted packets and engages in further classification of the packets. The admitted packets may be classified for determining their priority, and recommended to be dropped or forwarded to their destination address based on the classification information and congestion at the switching controller level.

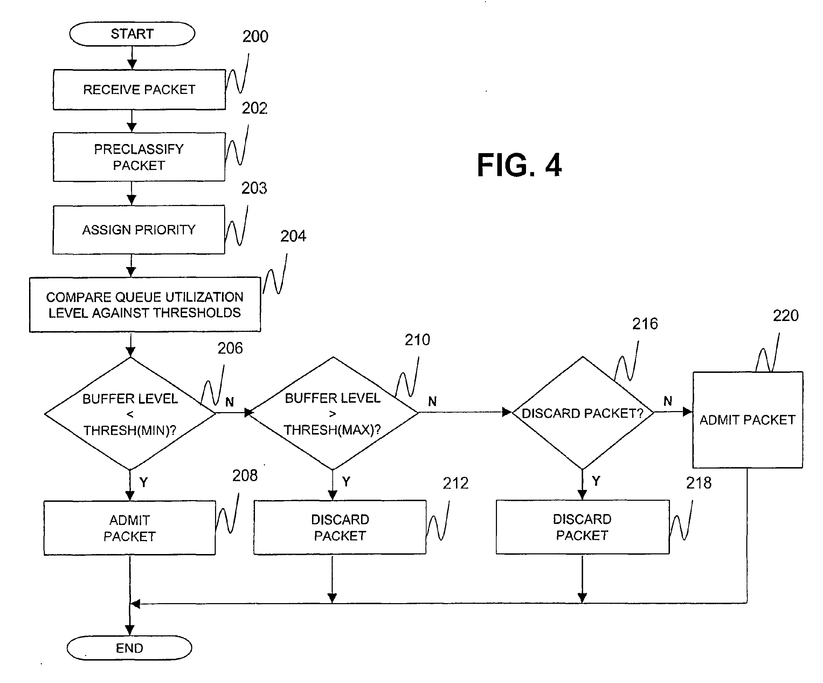

FIG. 4 is a flow diagram of a process for traffic congestion control at an access controller level according to one embodiment of the invention. The process starts, and in step 200, the packet preclassification engine 100 receives an inbound packet. In step 202, the packet preclassification engine 100 preclassifies the packet and determines a priority associated with the packet. In step 203, the packet preclassification engine 203 assigns the determined priority to the packet.

In step 204, the packet disposition engine 101 receives the priority information and compares the utilization level of the associated queue in the packet buffer 104 against minimum and maximum thresholds set for the queue. If a determination is made, in step 206, that the queue utilization level is less than the set minimum threshold, the packet is admitted in step 208 for forwarding to the packet switching controller 52.

If, on the other hand, a determination is made, in step 210, that the queue utilization level is greater than the set maximum threshold, the packet is discarded in step 212. Otherwise, the queue utilization level is between the minimum and maximum thresholds, and the packet preclassification engine, in step 216, determines if the packet is to be discarded based on the discard probability set for the priority assigned to the packet. If the answer is YES, the packet disposition engine 101 discards the packet in step 218. Otherwise, the packet is admitted in step 220.

Although this invention has been described in certain specific embodiments, those skilled in the art will have no difficulty devising variations which in no way depart from the scope and spirit of the present invention. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A data communication node (10) forwarding inbound packets (106) comprising:
an access controller (54) and a switching controller (52)
wherein the access controller (54) includes
- an input receiving an inbound packet (106);
- a classification engine (100) coupled to the input for classifying the inbound packet (106);
- a buffer storing inbound packets (106); and
- a disposition engine (101) coupled to the classification engine (100) and the buffer, the disposition engine (101) receiving classification information from the classification engine (100) and determining whether the inbound packet is to be admitted or not based on congestion status data determined from the classification information;
and wherein the switching controller (52) is coupled to the access controller (54) and comprises means for
- receiving the admitted inbound packet (106) from the access controller (54) for further classifying the packet (116) and
- determining whether the packet (116) is to be forwarded or not based on additional congestion status data determined from additional classification information.

2. The data communication node (10) of claim 1, wherein the access controller (54) is a media access controller.

3. the data communication node (10) of claim 1, wherein the classification information includes a priority associated with the inbound packet (106).

4. The data communication node (10) of claim 3, wherein the access controller (54) gives precedence in admitting packets associated with a first priority over packets associated with a second priority.

5. The data communication node (10) of claim 1, wherein the access controller (54) includes a buffer (104) storing admitted inbound packets (106).

6. The data communication node (10) of claim 5, wherein the congestion status data includes a buffer utilization level, the access controller (54) admitting the inbound packet (106) if the utilization level is lower than a predetermined threshold level.

7. The data communication node (10) of claim 5, wherein the congestion status data includes a buffer utilization level, the access controller (54) discarding the inbound packet (106) if the utilization level is higher than a predetermined threshold level.

8. The data communication node (10) of claim 1, wherein the access controller (54) discards the inbound packet (106) based on a discard probability that varies based on the classification information.

9. The data communication node (10) of anyone of claims 1 to 8, wherein the disposition engine (101) admits the inbound packet (106) if a utilization level of the buffer (104) is lower than a predetermined threshold level.

10. The data communication node (10) of anyone of claims 1 to 9, wherein the disposition engine (101) discards the inbound packet (106) if a utilization level of the buffer (104) is higher than a predetermined threshold level.

11. The data communication node (10) of anyone of claims 1 to 10, wherein the disposition engine (101) discards the inbound packet (106) based on a discard probability that varies based on the classification information.

12. A method for packet traffic management in a data communication node (10) including an access controller (54) and a switching controller (52), the method comprising
at the access controller (54);
receiving an inbound packet (106);
classifying the inbound packet (106);
determining congestion status data from the classification information;
admitting the inbound packet (106) or not based on the congestion status data; and
forwarding the inbound packet (106) to the switching controller (52) if the packet is admitted;
and at the switching controller (52):
receiving the admitted inbound packet (116) from the access controller (54);
further classifying the received packet (116); and
determining whether the admitted packet (116) is to be forwarded or not based on additional congestion status data determined from the additional classification information.

13. The method of claim 12, wherein the access controller (54) is a media access controller.

14. The method of claim 12 or claim 13, wherein the classification information includes a priority associated with the inbound packet (106).

15. The method of any of claims 12 to 14, wherein admitting the inbound packet (106) further comprises giving precedence to packets associated with a first priority over packets associated with a second priority.

16. The method of any of claims 12 to 15 further comprising storing the inbound packet (106) in a packet buffer (104) associated with the access controller (54) if the packet (106) is admitted.

17. The method of any of claims 12 to 16, wherein the determining of the congestion status data comprises determining a utilization level of the packet buffer (144).

18. The method of any of claims 12 to 17, wherein the admitting of the inbound packet (106) comprises admitting the inbound packet (106) if the utilization level of the packet buffer (104) is lower than a predetermined threshold level.

19. The method of any of claims 12 to 18 further comprising discarding the inbound packet (106) if the utilization level of the packet buffer (104) is higher than a predetermined threshold level.

20. The method of any of claims 12 to 19 further comprising discarding the inbound packet (106) based on a discard probability that varies based on the classification information.

21. The method of any of claims 12 to 20 further comprising performing a first congestion check at the access controller (54) based on the packet classification information and a first buffer utilization level.

22. The method of claim 21, further comprising performing a second congestion check at the switching controller (52) based on the further packet classification information and a second buffer utilization level.

## Patentansprüche

1. Datenkommunikationsknoten (10) zum Weiterleiten von eingehenden Paketen (106), umfassend:
Eine Zugriffssteuerung (54) und eine Vermittlungssteuerung (52),
wobei die Zugriffssteuerung (54) umfasst:
- Einen Eingang für den Empfang eines eingehenden Pakets (106);
- einen Klassifizierungsautomat (100) welcher an den Eingang gekoppelt ist, zum Klassifizieren des eingehenden Pakets (106);
- einen Puffer zum Speichern von eingehenden Paketen (106); und
- einen Verwaltungsautomat (101), welcher an den Klassifizierungsautomat (100) und den Puffer gekoppelt ist, wobei der Verwaltungsautomat (101) Klassifizierungsinformationen von dem Klassifizierungsautomat (100) empfängt und basierend auf den aus den Klassifizierungsinformationen ermittelten Überlaststatusdaten bestimmt, ob das eingehende Paket zugelassen werden soll oder nicht;
und wobei die Vermittlungssteuerung (52) an die Zugriffssteuerung (54) gekoppelt ist und Mittel umfasst für
- den Empfang des zugelassenen eingehenden Pakets (106) von der Zugriffssteuerung (54) für die weitere Klassifizierung des Pakets (116), und
- das Bestimmen, basierend auf aus zusätzlichen Klassifizierungsinformationen ermittelten zusätzlichen Überlaststatusdaten, ob das Paket (116) weitergeleitet werden soll oder nicht.

2. Datenkommunikationsknoten (10) nach Anspruch 1, wobei die Zugriffssteuerung (54) eine Medienzugriffssteuerung ist.

3. Datenkommunikationsknoten (10) nach Anspruch 1, wobei die Klassifizierungsinformationen eine mit dem eingehenden Paket (106) assoziierte Priorität umfassen (106).

4. Datenkommunikationsknoten (10) nach Anspruch 3, wobei die Zugriffssteuerung (54) der Zulassung von mit einer ersten Priorität assoziierten Paketen gegenüber mit einer zweiten Priorität assoziierten Paketen Vorrang gibt.

5. Datenkommunikationsknoten (10) nach Anspruch 1, wobei die Zugriffssteuerung (54) einen Puffer (104) für das Speichern von zugelassenen eingehenden Paketen (106) umfasst.

6. Datenkommunikationsknoten (10) nach Anspruch 5, wobei die Überlaststatusdaten einen Pufferauslastungsgrad umfassen, wobei die Zugriffssteuerung (54) das eingehende Paket (106) zulässt, wenn der Auslastungsgrad einen vorbestimmten Grenzwert unterschreitet.

7. Datenkommunikationsknoten (10) nach Anspruch 5, wobei die Überlaststatusdaten einen Pufferauslastungsgrad umfassen, wobei die Zugriffssteuerung (54) das eingehende Paket (106) verwirft, wenn der Auslastungsgrad einen vorbestimmten Grenzwert überschreitet.

8. Datenkommunikationsknoten (10) nach Anspruch 1, wobei die Zugriffssteuerung (54) das eingehende Paket (106) auf der Basis einer Verwerfungswahrscheinlichkeit, welche auf der Basis der Klassifizierungsinformationen variiert, verwirft.

9. Datenkommunikationsknoten (10) nach einem beliebigen der Ansprüche 1 bis 8, wobei der Verwaltungsautomat (101) das eingehende Paket (106) zulässt, wenn der Auslastungsgrad des Puffers (104) einen vorbestimmten Grenzwert unterschreitet.

10. Datenkommunikationsknoten (10) nach einem beliebigen der Ansprüche 1 bis 9, wobei der Verwaltungsautomat (101) das eingehende Paket (106) verwirft, wenn der Auslastungsgrad des Puffers (104) einen vorbestimmten Grenzwert überschreitet.

11. Datenkommunikationsknoten (10) nach einem beliebigen der Ansprüche 1 bis 10, wobei der Verwaltungsautomat (101) das eingehende Paket (106) auf der Basis einer Verwerfungswahrscheinlichkeit, welche auf der Basis der Klassifizierungsinformationen variiert, verwirft.

12. Verfahren für die Verwaltung des Paketverkehrs in einem Datenkommunikationsknoten (10) mit einer Zugriffssteuerung (54) und einer Vermittlungssteuerung (52), wobei das Verfahren an der Zugriffssteuerung (54) umfasst:
Empfangen eines eingehenden Pakets (106);
Klassifizieren des eingehenden Pakets (106);
Ermitteln der Überlaststatusdaten aus den Klassifizierungsinformationen;
Zulassen oder Ablehnen des eingehenden Pakets (106) auf der Basis der Überlaststatusdaten; und
Weiterleiten des eingehenden Pakets (106) an die Vermittlungssteuerung (52),
wenn das Paket zugelassen wird;
und an der Vermittlungssteuerung (52) umfasst:
Empfangen des zugelassenen Pakets (116) von der Zugriffssteuerung (54); weiteres Klassifizieren des empfangenen Pakets (116); und
Bestimmen, ob das zugelassene Paket (116) weitergeleitet werden soll oder nicht, auf der Basis der aus den zusätzlichen Klassifizierungsinformationen ermittelten zusätzlichen Überlaststatusdaten.

13. Verfahren nach Anspruch 12, wobei die Zugriffssteuerung (54) eine Medienzugriffssteuerung ist.

14. Verfahren nach Anspruch 12 oder Anspruch 13, wobei die Klassifizierungsinformationen eine mit dem eingehenden Paket (106) assoziierte Priorität enthalten.

15. Verfahren nach einem beliebigen der Ansprüche 12 bis 14, wobei das Zulassen des eingehenden Pakets (106) weiterhin umfasst, dass den mit einer ersten Priorität assoziierten Paketen gegenüber mit einer zweiten Priorität assoziierten Paketen Vorrang gegeben wird.

16. Verfahren nach einem beliebigen der Ansprüche 12 bis 15, weiterhin umfassend das Speichern des eingehenden Pakets (106) in einem mit der Zugriffssteuerung (54) assoziierten Paketpuffer (104), wenn das Paket (106) zugelassen wird.

17. Verfahren nach einem beliebigen der Ansprüche 12 bis 16, wobei das Ermitteln der Überlaststatusdaten das Ermitteln eines Auslastungsgrads des Paketpuffers (104) umfasst.

18. Verfahren nach einem beliebigen der Ansprüche 12 bis 17, wobei das Zulassen des eingehenden Pakets (106) das Zulassen des Pakets (106), wenn der Auslastungsgrad des Paketpuffers (104) einen vorbestimmten Grenzwert unterschreitet, umfasst.

19. Verfahren nach einem beliebigen der Ansprüche 12 bis 18, weiterhin umfassend das Verwerfen des eingehenden Pakets (106), wenn der Auslastungsgrad des Paketpuffers (104) einen vorbestimmten Grenzwert überschreitet.

20. Verfahren nach einem beliebigen der Ansprüche 12 bis 19, weiterhin umfassend das Verwerfen des eingehenden Pakets (106) auf der Basis einer Verwerfungswahrscheinlichkeit, welche auf der Basis der Klassifizierungsinformationen variiert.

21. Verfahren nach einem beliebigen der Ansprüche 12 bis 20, weiterhin umfassend das Durchführen einer ersten Überlastprüfung an der Zugriffssteuerung (54) auf der Basis der Paketklassifizierungsinformationen und eines ersten Pufferauslastungsgrads.

22. Verfahren nach Anspruch 21, weiterhin umfassend das Durchführen einer zweiten Überlastprüfung an der Vermittlungssteuerung (52) auf der Basis der weiteren Paketklassifizierungsinformationen und eines zweiten Pufferauslastungsgrads.

## Revendications

1. Noeud de communication de données (10) transférant des paquets entrants (106) comprenant :
un contrôleur d'accès (54) et un contrôleur de commutation (52) dans lequel le contrôleur d'accès (54) comprend
- une entrée recevant un paquet entrant (106) ;
- un moteur de classification (100) couplé à l'entrée pour classer le paquet entrant (106) ;
- un tampon stockant des paquets entrants (106) ; et
- un moteur de disposition (101) couplé au moteur de classification (100) et au tampon, le moteur de disposition (101) recevant des informations de classification provenant du moteur de classification (100) et déterminant si le paquet entrant doit être admis ou pas sur la base des données de l'état d'encombrement déterminées à partir des informations de classification ;
et dans lequel le contrôleur de commutation (52) est couplé au contrôleur d'accès (54) et comprend des moyens pour
- recevoir le paquet entrant admis (106) provenant du contrôleur d'accès (54) pour permettre une classification supplémentaire du paquet (116) et
- déterminer si le paquet (116) doit être transféré ou pas sur la base de données de l'état d'encombrement supplémentaires déterminées à partir d'informations de classification supplémentaires.

2. Noeud de communication de données (10) selon la revendication 1, dans lequel le contrôleur d'accès (54) est un contrôleur d'accès au support.

3. Noeud de communication de données (10) selon la revendication 1, dans lequel les informations de classification comprennent une priorité associée au paquet entrant (106).

4. Noeud de communication de données (10) selon la revendication 3, dans lequel le contrôleur d'accès (54) donne la priorité à l'admission de paquets associés à une première priorité par rapport à des paquets associés à une deuxième priorité.

5. Noeud de communication de données (10) selon la revendication 1, dans lequel le contrôleur d'accès (54) comprend un tampon (104) stockant des paquets entrants (106) admis.

6. Noeud de communication de données (10) selon la revendication 5, dans lequel les données de l'état d'encombrement comprennent un niveau d'utilisation du tampon, le contrôleur d'accès (54) admettant le paquet entrant (106) si le niveau d'utilisation est inférieur à un niveau de seuil prédéterminé.

7. Noeud de communication de données (10) selon la revendication 5, dans lequel les données de l'état d'encombrement comprennent un niveau d'utilisation du tampon, le contrôleur d'accès (54) rejetant le paquet entrant (106) si le niveau d'utilisation est supérieur à un niveau de seuil prédéterminé.

8. Noeud de communication de données (10) selon la revendication 1, dans lequel le contrôleur d'accès (54) rejette le paquet entrant (106) sur la base d'une probabilité de rejet qui varie selon les informations de classification.

9. Noeud de communication de données (10) selon l'une quelconque des revendications 1 à 8, dans lequel le moteur de disposition (101) admet le paquet entrant (106) si un niveau d'utilisation du tampon (104) est inférieur à un niveau de seuil prédéterminé.

10. Noeud de communication de données (10) selon l'une quelconque des revendications 1 à 9, dans lequel le moteur de disposition (101) rejette le paquet entrant (106) si un niveau d'utilisation du tampon (104) est supérieur à un niveau de seuil prédéterminé.

11. Noeud de communication de données (10) selon l'une quelconque des revendications 1 à 10, dans lequel le moteur de disposition (101) rejette le paquet entrant (106) sur la base d'une probabilité de rejet qui varie selon les informations de classification.

12. Procédé pour la gestion du trafic de paquets dans un noeud de communication de données (10) comprenant un contrôleur d'accès (54) et un contrôleur de commutation (52), le procédé comprenant les étapes suivantes au niveau du contrôleur d'accès (54) :
recevoir un paquet entrant (106) ;
classer le paquet entrant (106) ;
déterminer des données de l'état d'encombrement à partir des informations de classification ;
admettre ou pas le paquet entrant (106) sur la base des données de l'état d'encombrement ; et transférer le paquet entrant (106) vers le contrôleur de
commutation (52) si le paquet est admis ;
et au niveau du contrôleur de commutation (52) :
recevoir le paquet entrant (116) admis provenant du contrôleur d'accès (54) ;
permettre une classification supplémentaire du paquet (116) reçu ; et
déterminer si le paquet (116) admis doit être transféré ou pas sur la base de données de l'état d'encombrement supplémentaires déterminées à partir des informations de classification supplémentaires.

13. Procédé selon la revendication 12, dans lequel le contrôleur d'accès (54) est un contrôleur d'accès au support.

14. Procédé selon la revendication 12 ou la revendication 13, dans lequel les informations de classification comprennent une priorité associée au paquet entrant (106).

15. Procédé selon l'une quelconque des revendications 12 à 14, dans lequel l'admission du paquet entrant (106) consiste en outre à donner la priorité aux paquets associés à une première priorité par rapport aux paquets associés à une deuxième priorité.

16. Procédé selon l'une quelconque des revendications 12 à 15 comprenant en outre le stockage du paquet entrant (106) dans un tampon de paquets (104) associé au contrôleur d'accès (54) si le paquet (106) est admis.

17. Procédé selon l'une quelconque des revendications 12 à 16, dans lequel la détermination des données de l'état d'encombrement comprend la détermination d'un niveau d'utilisation du tampon de paquets (104).

18. Procédé selon l'une quelconque des revendications 12 à 17, dans lequel l'admission du paquet entrant (106) comprend l'admission du paquet entrant (106) si le niveau d'utilisation du tampon de paquets (104) est inférieur à un niveau de seuil prédéterminé.

19. Procédé selon l'une quelconque des revendications 12 à 18 comprenant en outre le rejet du paquet entrant (106) si le niveau d'utilisation du tampon de paquets (104) est supérieur à un niveau de seuil prédéterminé.

20. Procédé selon l'une quelconque des revendications 12 à 19 comprenant en outre le rejet du paquet entrant (106) sur la base d'une probabilité de rejet qui varie selon les informations de classification.

21. Procédé selon l'une quelconque des revendications 12 à 20 comprenant en outre la réalisation d'une première vérification d'encombrement au niveau du contrôleur d'accès (54) sur la base des informations de classification de paquets et d'un premier niveau d'utilisation du tampon.

22. Procédé selon la revendication 21, comprenant en outre la réalisation d'une deuxième vérification d'encombrement au niveau du contrôleur de commutation (52) sur la base des informations de classification de paquets supplémentaires et d'un deuxième niveau d'utilisation du tampon.
